(19) Europäisches Patentamt / European Patent Office / Office européen des brevets

(11) **EP 4 115 098 B1**

(12) **EUROPÄISCHE PATENTSCHRIFT**

(45) Veröffentlichungstag und Bekanntmachung des Hinweises auf die Patenterteilung:
**14.02.2024  Patentblatt 2024/07**

(21) Anmeldenummer: **20839044.3**

(22) Anmeldetag: **22.12.2020**

(51) Internationale Patentklassifikation (IPC):
**F16H 57/08** *(2006.01)*    **F03D 15/00** *(2016.01)*

(52) Gemeinsame Patentklassifikation (CPC):
**F16H 57/082; F03D 15/00;** F05B 2260/40311;
F16H 57/0479; Y02E 10/72

(86) Internationale Anmeldenummer:
**PCT/EP2020/087600**

(87) Internationale Veröffentlichungsnummer:
**WO 2021/175484 (10.09.2021 Gazette 2021/36)**

(54) **PLANETENTRÄGER, PLANETENGETRIEBE, ANTRIEBSSTRANG UND WINDKRAFTANLAGE**

PLANET CARRIER, PLANETARY GEAR, DRIVE TRAIN AND WIND TURBINE

PORTE SATELLITES, ENGRENAGE ÉPICYCLOÏDAL, CHAINE CINÉMATIQUE ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2020  EP 20161481**

(43) Veröffentlichungstag der Anmeldung:
**11.01.2023  Patentblatt 2023/02**

(73) Patentinhaber: **Flender GmbH**
**46395 Bocholt (DE)**

(72) Erfinder:
• **LENSING, Volker**
**46414 Rhede (DE)**
• **FUNKE, Timo**
**46395 Bochold (DE)**
• **TELAAR, Carolin**
**46419 Isselburg (DE)**

(74) Vertreter: **Michalski Hüttermann & Partner Patentanwälte mbB**
**Kaistraße 16A**
**40221 Düsseldorf (DE)**

(56) Entgegenhaltungen:
DE-A1-102007 003 676    DE-A1-102013 221 862
DE-A1-102014 200 463

**EP 4 115 098 B1**

**Beschreibung**

Die Erfindung betrifft einen Planetenträger, der zur Verwendung in einem Planetengetriebe geeignet ist. Die Erfindung betrifft auch ein entsprechendes Planetengetriebe und einen Antriebsstrang, der mit einem solchen Planetengetriebe ausgestattet ist. Ferner betrifft die Erfindung eine Windkraftanlage, die einen derartigen Antriebsstrang aufweist.

Aus der Offenlegungsschrift DE 10 2014 203 587 A1 ist ein Planetenträger für ein Kraftfahrzeug bekannt, der zwei aneinander montierte Planetenträgerhälften umfasst. Eine erste Planetenträgerhälfte weist eine erste Wange zur Aufnahme von Planetenradbolzen auf, zwischen denen angeformte Stege angeordnet sind. Die angeformten Stege sind mit einer im Wesentlichen flachen zweiten Wange an einer zweiten Planetenträgerhälfte verbunden.

EP 2 677 209 A1 offenbart einen Planetenträger für ein Planetengetriebe, der zwei gegenüberliegende Wangen umfasst, die über eine Mehrzahl an Stegen miteinander verbunden sind. An den Stegen sind Übergänge zu den Wangen ausgebildet. Zu einer Gewichts- und Festigkeitsoptimierung sind die Übergänge als Kugelkalotten ausgebildet.

Aus dem Dokument EP 3 587 863 A1 ist ein mehrstufiges Planetengetriebe bekannt, das eine erste und eine zweite Getriebestufe aufweist. Die erste und zweite Getriebestufe sind jeweils als Planetenstufen ausgebildet und weisen jeweils einen Planetenträger auf. Der Planetenträger der ersten Planetenstufe weist dabei zumindest fünf Planetenräder auf.

Aus DE 10 2014 200 463 A1 ist ein Planetenträger mit zwei Wangen bekannt, bei denen die Wangen an ihren voneinander weg weisenden Axialseiten in einem gemeinsamen Umfangsbereich mit Plantenträgerstegen eingeprägt ausgestaltet sind.

Aus DE 10 2013 221 862 A2 und DE 10 2007 003 676 A1 sind weitere Planetenträger mit gerundeten Übergängen zwischen einer Wange und einem Steg bekannt.

Planetengetriebe werden in einer Vielzahl an technischen Gebieten eingesetzt, in denen steigende Anforderungen an diese in puncto Leistungsfähigkeit und Wirtschaftlichkeit gestellt werden. Infolgedessen werden an die einzelnen Komponenten eines Planetengetriebes, also auch einen Planetenträger, steigende Anforderungen gestellt. Der Erfindung liegt die Aufgabenstellung zugrunde, ein Planetengetriebe bezüglich Leistungsfähigkeit und Wirtschaftlichkeit zu verbessern und hierzu zumindest eine geeignete Komponente bereitzustellen.

Die Aufgabenstellung wird durch erfindungsgemäßen Planetenträger gelöst, der eine erste und eine zweite Wange aufweist. Die Wangen sind gegenüberliegend angeordnet und durch eine Mehrzahl an Stegen miteinander verbunden, so dass eine Drehung der ersten Wange um eine Hauptdrehachse auf die zweite Wange übertragbar ist. Der Steg weist eine gewölbte Außenfläche auf, die im Wesentlichen in einer Radialrichtung nach au-ßen gerichtet ist und zu einer Mantelfläche des Stegs gehört. Der Planetenträger ist einstückig ausgebildet. Erfindungsgemäß ist die gewölbte Außenfläche in zumindest einem Bereich, der in einem axialen Mittelabschnitt und einem axialen Randabschnitt liegt, antiklastisch, also sattelflächenförmig, ausgebildet, wobei eine Kombination des axialen Mittelabschnitts mit den axialen Randabschnitt im Wesentlichen eine Axialabmessung des Planetenträgers definiert. Die gewölbte Außenfläche des Stegs ist damit um zwei separate Wölbachsen in entgegengesetzter Richtung gewölbt ausgebildet. Eine antiklastisch gewölbte Außenfläche am Steg bietet ein hohes Maß an mechanischer Beanspruchbarkeit bei reduziertem Materialeinsatz, also reduziertem Gewicht. Die antiklastisch gewölbte Außenfläche erlaubt es, den Steg mit erhöhten Radien auszubilden. Dabei können die Radien konstant oder veränderlich ausgebildet sein. Dies ermöglicht es, Formen mit geringen Radien zu vermeiden, durch die erhöhte mechanische Beanspruchungen hervorgerufen werden können. Insgesamt bietet dies eine gesteigerte Materialausnutzung, was wiederum das Prinzip des Leichtbaus verwirklicht. Darüber hinaus sind derartige Formen einfach zu entformen, was eine einfache und wirtschaftliche Herstellung des erfindungsgemäßen Planetenträgers, beispielsweise durch Gießen, erlaubt.

Der Steg umfasst auch einen Übergang zur ersten und zweiten Wange des Planetenträgers. Dementsprechend setzt sich die Außenfläche des Stegs auch auf dem Übergang zur ersten und/oder zweiten Wange fort. Am Übergang zur ersten bzw. zweiten Wange bietet die antiklastische Außenfläche auch eine vorteilhafte Form, durch die mechanische Spannungserhöhungen durch Einschnürungen am Planetenträger vermieden werden. Dadurch wird auch an der ersten bzw. zweiten Wange des Planetenträgers eine erhöhte Materialausnutzung erzielt und das Prinzip des Leichtbaus verwirklicht.

Erfindungsgemäß ist die gewölbte Außenfläche am Übergang um einer erste Wölbachse konvex gewölbt ausgebildet. Der Begriff "konvex" ist hierbei auf eine Betrachtung des Planetenträgers von außen bezogen. Die erste Wölbachse ist entlang einer Tangentialrichtung des Planetenträgers ausgerichtet und steht damit im Wesentlichen windschief zur Hauptdrehachse des Planetenträgers. Die erste Wölbachse durchdringt somit den entsprechenden Steg des Planetenträgers. In einem Längsschnitt betrachtet, also einem Schnitt entlang der Hauptdrehachse des Planetenträgers, weist zumindest der Übergang an der Außenfläche im Wesentlichen eine Bogenform auf. Eine derartige Bogenform folgt am Planetenträger einem Spannungsverlauf, der zwischen Bolzenaugen in der ersten und zweiten Wange in einem bestimmungsgemäßen Betrieb auftritt. Hierdurch werden mechanische Spannungsspitzen vermieden und so ein hohes Maß an mechanischer Stabilität bei reduziertem Materialaufwand erzielt.

Des Weiteren kann die gewölbte Außenfläche um eine zweite Wölbachse konkav gewölbt ausgebildet sein. Der Begriff "konkav" ist dabei auf eine Betrachtung des Planetenträgers von außen bezogen. Die zweite Wölbachse verläuft im Wesentlichen parallel zur Hauptdrehachse des Planetenträgers. Die zweite Wölbachse durchdringt somit die erste und zweite Wange. Die konkav gewölbte Außenfläche am Übergang folgt einem Spannungsverlauf zwischen der Nabe in das Bolzenauge in der ersten oder der zweiten Wange. Infolgedessen wird eine erhöhte Materialausnutzung erreicht. Auch hierdurch werden mechanische Spannungserhöhungen vermieden und eine erhöhte Materialausnutzung erzielt.

Darüber hinaus kann die gewölbte Außenfläche bezogen auf die zweite Wölbachse an unterschiedlichen Axialpositionen, also entlang der Hauptdrehachse des Planetenträgers betrachtet, unterschiedliche Krümmungsradien aufweisen. Die gewölbte Außenfläche kann in zumindest einem axialen Randabschnitt des Stegs, also im Bereich der ersten bzw. zweiten Wange, bezogen auf die zweite Wölbachse einen ersten Krümmungsradius aufweisen. In einem axialen Mittelabschnitt, der sich zwischen den axialen Randabschnitten befindet, kann die gewölbte Außenfläche, bezogen auf die zweite Wölbachse, einen zweiten Krümmungsradius aufweisen. Dabei ist der erste Krümmungsradius betragsmäßig geringer als der zweite Krümmungsradius. Dadurch liegt im axialen Mittelabschnitt des Stegs eine Form vor, die ein vorteilhaftes Aufnehmen von mechanischen Zugspannungen erlaubt. An den axialen Randabschnitten wiederum folgen der Steg und der Übergang dem Spannungsverlauf, der im bestimmungsgemäßen Betrieb im Planetenträger eintritt. Ein betragsmäßig geringer zweiter Krümmungsradius erlaubt ferner eine erhöhte Materialrücknahme an der ersten bzw. zweiten Wange ohne dadurch die mechanische Belastbarkeit des Planetenträgers übermäßig zu beeinträchtigen. Hierdurch wird insgesamt für den Steg eine verbesserte Materialausnutzung erzielt, was wiederum eine gewichtssparende Konstruktion des Planetenträgers erlaubt.

In einer weiteren Ausführungsform des beanspruchten Planetenträgers weist der Steg um die erste Wölbachse einen im Wesentlichen konstanten dritten Krümmungsradius auf. Der Steg geht dabei konstant in den Übergang zur ersten bzw. zweiten Wange über. Ein konstanter dritter Krümmungsradius bezogen auf die erste Wölbachse ist in einfacher Weise herzustellen und bietet zwischen der ersten und zweiten Wange über den entsprechenden Steg hinweg ein hohes Maß an Belastbarkeit.

Ferner kann der beanspruchte Planetenträger einstückig ausgebildet sein. Dazu kann der Planetenträger beispielsweise als Gussbauteil hergestellt sein. Bei einem einstückigen Planetenträger bilden die erste Wange, die zweite Wange und die Stege ein einziges Bauteil. Der einstückig ausgebildete Planetenträger kann ferner zumindest eine angeformte Nabe umfassen. Alternativ kann die Nabe am Planetenträger auch an die erste oder zweite Wange montiert sein. Dies kann beispielsweise gemäß der Lösung nach der bisher unveröffentlichten Europäischen Patentanmeldung EP 19171876.6 erfolgen. Der Offenbarungsgehalt von EP 19171876.6 wird durch Verweisung in die vorliegende Anmeldung mit einbezogen.

Ein einstückig ausgebildeter Planetenträger kann schnell und kosteneffizient als Rohteil hergestellt werden und erfordert nur ein Minimum an weiteren Bearbeitungsschritten, insbesondere weitere spanende Bearbeitungen. Ferner werden bei einem einstückigen Planetenträger mechanische Spannungsspitzen an Schnittstellen zwischen unterschiedlichen Teilen vermieden. Insbesondere kann der einstückige Planetenträger, zumindest als Rohteil, aus einem einzigen Material hergestellt sein, so dass im gesamten Planetenträger im Wesentlichen dieselben Materialeigenschaften vorliegen. Dadurch wird die erzielbare Materialausnutzung weiter gesteigert. Ferner sind entsprechende Herstellungsverfahren, beispielsweise Gießen, kosteneffizient und zuverlässig.

Des Weiteren kann der beanspruchte Planetenträger an der gewölbten Außenfläche in einem Bereich der ersten und/oder zweiten Wange einen konvexen Übergang zu einem Umfangssteg aufweisen. Unter einem Umgangssteg ist hierbei ein Abschnitt der ersten bzw. zweiten Wange, der im Wesentlichen in Umfangsrichtung verläuft und radial neben einem Bolzenauge liegt. Der Umfangssteg gehört an der ersten bzw. zweiten Wange zu einem Verzahnungsfenster, das zwischen zwei gegenüberliegenden Bolzenaugen liegt und durch das im montierten Zustand zumindest eine Verzahnung eines dort eingebauten Planetenrads ragt. In einer Stirnansicht weist die erste bzw. zweite Wange damit im Wesentlichen eine umlaufende wellenförmige Kontur auf, die alternierend konkav und konvex gekrümmt ist. Durch den konvexen Übergang vom Steg auf die erste bzw. zweite Wange werden auch dort Spannungsspitzen vermieden. Hierdurch wird für den Planetenträger ein hohes Maß an Belastbarkeit bei niedrigem Gewicht erzielt.

In einer weiteren Ausführungsform des beanspruchten Planetenträgers ist in der ersten und/oder zweiten Wange zumindest ein Schmierstoffkanal ausgebildet. Der Schmierstoffkanal ist beispielsweise als eine Bohrung in der ersten und/oder zweiten Wange ausgebildet. Ein Schmierstoffkanal kann als Radialbohrung oder als Axialbohrung ausgebildet sein. Die Begriffe "axial" und "radial" sind hierbei auf die Hauptdrehachse des Planetenträgers bezogen. Durch die antiklastische Außenfläche am Steg liegt an der ersten bzw. zweiten Wange eine Materialrücknahme vor. Infolgedessen kann eine Radialbohrung in der ersten bzw. zweiten Wange verkürzt ausgebildet sein. Hierdurch wird die Herstellung der Radialbohrung vereinfacht und beschleunigt. Ferner kann ein Schmierstoffkanal auch als Axialbohrung ausgebildet sein, die sich durch die erste und/oder zweite Wange und den Steg erstreckt. Die Materialrücknahme an der ersten bzw. zweiten Wange, die sich durch die antiklastische Außenfläche des Stegs ergibt, erlaubt es ebenso, dass die Axialbohrung eine reduzierte Länge aufweist. Auch hierdurch wird der Fertigungsaufwand für die Axialbohrung, also einen Schmierstoffkanal, reduziert. Ferner können zumindest eine Radialbohrung und eine Axialbohrung, die sich kreuzen, gemeinsam einen Schmierstoffkanal bilden. Schmierstoffkanäle stellen eine strukturelle Schwächung des Planetenträgers dar, für die konstruktiv eine hinreichende Belastbarkeitsreserve bereitzustellen ist. Die antiklastische Außenfläche des Stegs bietet ein erhöhtes Maß an mechanischer Belastbarkeit, die es in einfacher und kosteneffizienter Weise erlaubt, eine Mehrzahl an Schmierstoffkanälen im Planetenträger auszubilden. Dadurch ist eine verbesserte Schmierstoffversorgung im Planetenträger, beispielsweise für Gleitlager oder Planetenräder, erzielbar. Alternativ oder ergänzend kann ein Schmierstoffkanal einen erhöhten Durchmesser aufweisen, durch den ein erhöhter Durchsatz an Schmierstoff möglich ist. Insgesamt erlaubt die antiklastische Außenfläche damit eine verbesserte Schmierstoffversorgung im Planetenträger. Dadurch wiederum sind Planetenträger mit einer erhöhten Anzahl an Planetenrädern praktikabel.

Darüber hinaus kann der beanspruchte Planetenträger dazu ausgebildet sein, mindestens vier Planetenräder aufzunehmen. Bevorzugt kann der Planetenträger zum Aufnehmen von mindestens fünf, weiter bevorzugt von mindestens sieben, besonders bevorzugt zehn Planetenrädern ausgebildet sein. Je höher die Anzahl an Planetenrädern in einem Planetenträger ist, umso schmaler sind dessen Stege und umso geringer deren mechanische Beanspruchbarkeit. Durch die antiklastische Außenfläche von mindestens einem Steg wird damit ein Zugewinn an mechanischer Belastbarkeit erzielt, der es wiederum erlaubt, Planetenträger für mindestens fünf Planetenräder herzustellen, die kompakt und gewichtssparend sind. Entsprechende Planetengetriebe können folglich in vorteilhafter Weise beispielsweise in Antriebssträngen von Windkraftanlagen eingesetzt werden.

In einer weiteren Ausführungsform des beanspruchten Planetenträgers weist dieser eine massenspezifische Drehmomentdichte von 200 Nm/kg bis 1600 Nm/kg auf, bevorzugt von 400 Nm/kg bis 1200 Nm/kg, besonders bevorzugt von 450 Nm/kg bis 850 Nm/kg. Die massenspezifische Drehmomentdichte ist das Verhältnis aus einem maximalen Nenndrehmoment, das in den Planetenträger bestimmungsgemäß einleitbar ist, und der Masse des Planetenträgers selbst. Die Masse des Planetenträgers ist dabei auf ein bearbeitetes Rohteil bezogen ohne weitere Anbauteile wie beispielsweise Planetenradbolzen oder Planetenräder. Die Masse des Planetenträgers umfasst dabei auch die Masse der Nabe, die mit der ersten oder zweiten Wange verbunden ist. Bei einer Betrachtung der massenspezifischen Drehmomentdichte an einem Planetenträger ohne Nabe kann diese korrespondierend höher ausfallen. Infolgedessen bietet der beanspruchte Planetenträger ein hohes Maß an mechanischer Stabilität bei niedrigem Gewicht. Dies erlaubt bei einem Planetengetriebe, das in einem Antriebsstrang einer Windkraftanlage einzusetzen ist, eine vereinfachte Montage auf einer Gondel der Windkraftanlage.

Ferner kann der beanspruchte Planetenträger eine relative Planetenradbreite von 0,50 bis 0,85, bevorzugt von 0,55 bis 0,80, besonders bevorzugt von 0,60 bis 0,75 aufweisen. Unter einer relativen Planetenradbreite ist dabei ein Verhältnis zwischen einer Axialabmessung des lichten Raums zwischen der ersten und zweiten Wange und einer axialen Außenabmessung des Planetenträgers von der ersten zur zweiten Wange zu verstehen. Die Axialabmessung des lichten Raums zwischen der ersten und zweiten Wange entspricht dabei im Wesentlichen einer Axiallänge des axialen Mittelabschnitts des Stegs. Der lichte Raum zwischen der ersten und zweiten Wange definiert im Wesentlichen, unter Berücksichtigung beispielsweise von Lagern und Einbautoleranzen, die maximale Breite eines in den Planetenträger einzubauenden Planetenrads. Je höher die relative Planetenradbreite ist, umso höher ist die Ausnutzung des vorhandenen Bauraums im Planetenträger. Zu breiter ein Planetenrad wiederum ist, umso höhere Drehmomente sind in der entsprechenden Planetenstufe übertragbar. Dementsprechend bietet der beanspruchte Planetenträger ein hohes Maß an Kompaktheit und ein erhöhtes Nenndrehmoment. Dementsprechend ist der beanspruchte Planetenträger in vorteilhafter Weise in Anwendungen wie Windkraftanlagen einsetzbar.

In einer weiteren Ausführungsform des beanspruchten Planetenträgers ist zumindest zwischen zwei Stegen, beispielsweise zwischen zwei benachbarten Stegen, ein Verzahnungsfenster ausgebildet. Im montierten Zustand erstreckt sich ein Planetenrad in Radialrichtung aus dem Verzahnungsfenster, so dass ein Eingreifen in ein Hohlrad erfolgen kann. Radial innerhalb des Verzahnungsfensters ist ein Bolzenauge in der ersten und/oder zweiten Wange ausgebildet. Durch eine Radialposition des Bolzenauges und einer Formgebung der Stege ist ein maximaler Planetenraddurchmesser festgelegt. Bezogen auf die Hauptdrehachse des Planetenträgers wird in Umfangsrichtung die Größe des Verzahnungsfensters durch einen Fensterwinkel definiert. Im Zusammenhang mit einem Planetenträgerdurchmesser ist über den Fensterwinkel und den maximalen Planetenraddurchmesser ein Fensteröffnungskoeffizient definiert. Der Fensterkoeffizient entspricht hierbei der Gleichung

$$F = \frac{D_{Tr\ddot{a}ger} \cdot \sin\left(\frac{\alpha}{2}\right)}{D_{Planetenrad\_max}}$$

mit

F:=                Fensteröffnungskoeffizient;

$D_{Träger}$:=          Planetenträgerdurchmesser am Berührungspunkt von Steg und Schenkel des Fensteröffnungswinkels;

$D_{Planetenrad\_max}$:=     Maximaler Planetenraddurchmesser;

$\alpha$:=               Fensterwinkel.

Der Planetenträger kann in der beanspruchten Ausführungsform einen Fensteröffnungskoeffizienten aufweisen, der 0,3 bis 1,5 beträgt, vorzugsweise 0,4 bis 1,2, besonders bevorzugt von 0,5 bis 1,0. Der beanspruchte Planetenträger erlaubt es so, den zwischen der ersten und zweiten Wange bereitgestellten lichten Raum für Planetenräder auszunutzen. Hohlräume, die für den Betrieb eines Planetengetriebes mechanisch funktionslos sind, werden so vermieden. Insgesamt wird dadurch ein leistungsfähiger und gleichzeitig kompakter Aufbau des zum Planetenträger gehörenden Planetengetriebes ermöglicht. Der Fensteröffnungskoeffizient ist in einem axial mittleren Bereich eines Verzahnungseingriffs eines Planetenrads zu bestimmen.

Die zugrundeliegende Aufgabenstellung wird auch durch ein erfindungsgemäßes Planetengetriebe gelöst. Das Planetengetriebe weist zumindest eine Planetenstufe auf. Die Planetenstufe umfasst ein Hohlrad und einen Planetenträger, in dem zumindest ein Planetenrad drehbar angeordnet ist. Das Planetengetriebe weist auch ein Sonnenrad auf, wobei das zumindest eine Planetenrad mit dem Sonnenrad und dem Hohlrad kämmt. Die Planetenstufe kann eine stationäre Komponente umfassen oder ausschließlich drehbare Komponenten umfassen. Eine Planetenstufe, die ausschließlich drehbare Komponenten umfasst kann beispielswiese als Koppelstufe eines Koppelgetriebes verwendet werden. Erfindungsgemäß ist der Planetenträger gemäß einer der oben skizzierten Ausführungsformen ausgebildet. Die technischen Vorteile des Planetenträgers werden so auf das erfindungsgemäße Planetengetriebe übertragen.

In einer Ausführungsform des beanspruchten Planetengetriebes kann an einer Außenseite des Planetenträgers eine Leitung für Schmierstoff ausgebildet sein. Die Leitung für Schmierstoff kann dabei an einem Steg angeordnet sein. Durch die antiklastisch geformte Außenfläche wird in Radialrichtung eine Platzersparnis erzielt. Der so eingesparte Bauraum erlaubt es, dort eine Leitung für Schmierstoff anzubringen. Dadurch können aufwendige Bohrungen im Planetenträger vermieden werden. Insbesondere sind dadurch Planetenträger von erhöhten Breiten, also erhöhten Axialabmessungen, realisierbar, für die keine ausreichend genauen Schmierstoffkanäle in Form von Bohrungen im Planetenträger umsetzbar sind. Durch den erfindungsgemäßen Planetenträger wird so das Leistungsspektrum von Planetengetrieben in einfacher Weise erweitert.

Ebenso wird die oben dargestellte Aufgabenstellung durch den erfindungsgemäßen Antriebsstrang gelöst. Der Antriebsstrang umfasst eine Rotorwelle, die beispielweise durch einen Rotor einer Windkraftanlage antreibbar ist. Die Rotorwelle ist drehmomentübertragend mit einem Getriebe verbunden, das wiederum drehmomentübertragend mit einem Generator verbunden ist. Erfindungsgemäß ist das Getriebe im Antriebsstrang als ein Planetengetriebe gemäß einer der oben beschriebenen Ausführungsformen ausgebildet.

Ferner wird die skizzierte Aufgabenstellung durch eine erfindungsgemäße Windkraftanlage gelöst. Die Windkraftanlage umfasst einen Rotor, der drehbar an einer Gondel angebracht ist. Der Rotor ist mit einer Rotorwelle eines Antriebsstrangs verbunden, so dass der Rotorwelle Antriebsleistung zugeführt wird. Der Antriebsstrang ist erfindungsgemäß nach einer der zuvor dargestellten Ausführungsformen ausgebildet.

Die beschriebene Aufgabenstellung wird ebenso durch die erfindungsgemäße Industrie-Applikation gelöst. Die Industrie-Applikation umfasst eine Antriebseinheit, die beispielsweise als Elektromotor, Verbrennungsmotor oder Hydraulikmotor ausgebildet sein kann. Durch die Antriebseinheit wird eine Antriebsleistung zur Verfügung gestellt, die einem Getriebe zugeführt wird. Unter Wandlung der vorliegenden Drehzahl und des vorliegenden Drehmoments wird die Antriebsleistung einer Abtriebseinheit zugeführt. Die Abtriebseinheit kann beispielsweise als mechanische Anwendung ausgebildet sein, beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Erfindungsgemäß ist das Getriebe, über das die Antriebseinheit mit der Abtriebseinheit verbunden ist, als ein Planetengetriebe nach einer der oben skizzierten Ausführungsformen ausgebildet.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander im Rahmen des durch die Ansprüche definierten Schutzbereichs kombinierbar. Ferner sind die in den Figuren gezeigten Ausführungsformen mit den oben skizzierten Merkmalen im Rahmen des durch die Ansprüche definierten Schutzbereichs kombinierbar. Es zeigen im Einzelnen:

FIG 1     schematisch eine Schrägansicht einer ersten Ausführungsform des beanspruchten Planetenträgers;

FIG 2     schematisch eine Detailansicht der ersten Ausführungsform des beanspruchten Planetenträgers;

FIG 3    einen Längsschnitt der ersten Ausführungsform des beanspruchten Planetenträgers;

FIG 4    eine Stirnansicht der ersten Ausführungsform des beanspruchten Planetenträgers;

FIG 5    eine zweite Ausführungsform des beanspruchten Planetenträgers im Querschnitt;

FIG 6    einen Aufbau einer ersten Ausführungsform der beanspruchten Windkraftanlage;

FIG 7    einen Aufbau einer ersten Ausführungsform der beanspruchten Industrie-Applikation.

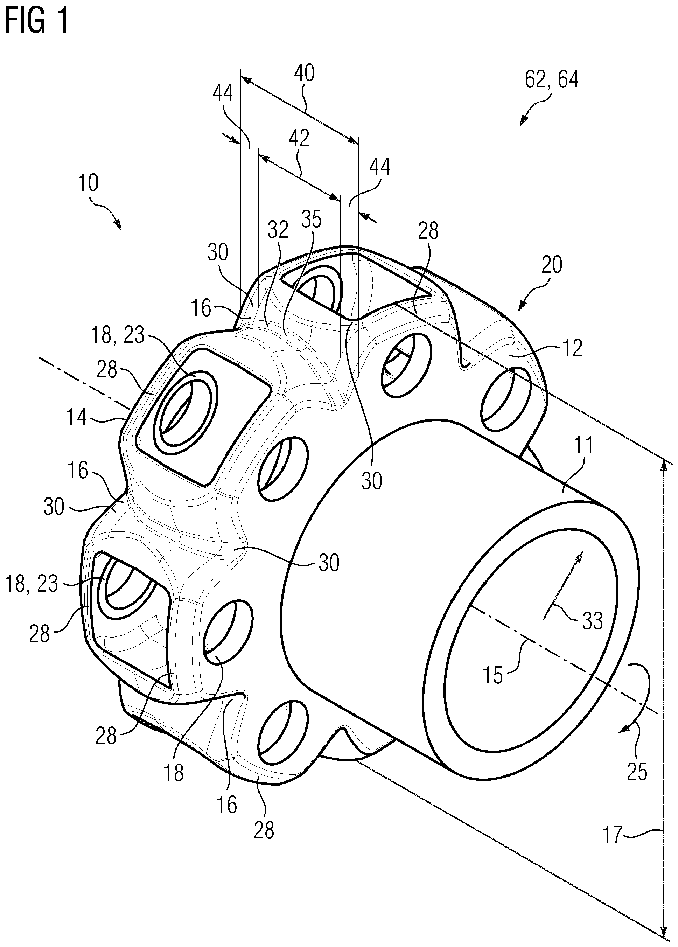

In FIG 1 ist schematisch eine erste Ausführungsform des beanspruchten Planetenträgers 10 in einer Schrägansicht dargestellt. Der Planetenträger 10 umfasst eine erste und eine zweite Wange 12, 14, die entlang einer Hauptdrehachse 15 des Planetenträgers 10 gegenüberliegend angeordnet sind. Durch die erste und zweite Wange 12, 16 ist ein Planetenträgerdurchmesser 17 definiert. Der Planetenträger 10 ist einstückig mit einer Nabe 11 ausgebildet, über die eine Antriebsleistung 25 in den Planetenträger 10 einleitbar ist. Die erste und zweite Wange 12, 14 sind über eine Mehrzahl an Stegen 16 miteinander verbunden, die sich im Wesentlichen in Axialrichtung, also entlang der Hauptdrehachse 15, erstrecken. Zwischen den Stegen 16 weisen die erste und zweite Wange 12, 14 jeweils gegenüberliegend angeordnete Tangentialstege 28 auf. Benachbart zu den Tangentialstegen 28 sind in der ersten und zweiten Wange 12, 14 jeweils Bolzenaugen 18 ausgebildet, die fluchtend positioniert sind und jeweils zur Aufnahme von nicht näher dargestellten Planetenradbolzen 23 ausgebildet sind. Die Stege 16 und die Tangentialstege 28 bilden Verzahnungsfenster 21. Durch die Verzahnungsfenster 21 erstrecken sich im montierten Zustand Verzahnungen von nicht näher dargestellten Planetenrädern 20, die auf den Planetenradbolzen 23 anzuordnen sind. Die Planetenräder 20 sind dazu ausgebildet, mit einem nicht näher dargestellten Hohlrad 62 und einem nicht näher dargestellten Sonnenrad 64 zu kämmen. Der Planetenträger 10 ist einstückig ausgebildet, so dass die erste und zweite Wange 12, 14 und die Stege 16 eine einzige Komponente bilden. Der Planetenträger 10 ist zumindest als Rohteil durch Gießen herstellbar.

Die Stege 16 weisen jeweils einen Bereich 35 auf, der in einem axialen Mittelabschnitt 42 und/oder einem axialen Randabschnitt 44 liegt. Eine Kombination des axialen Mittelabschnitts 42 mit den axialen Randabschnitt 44 definiert im Wesentlichen eine Axialabmessung 40 des Planetenträgers 10. Die Stege 16 umfassen jeweils einen Übergang 30 zur ersten und zweiten Wange 12, 14 und weisen eine Außenfläche 32 auf, die im Wesentlichen einer radial nach außen gerichteten Seite des Stegs 16 entspricht. Eine radial äußere Richtung ist in FIG 1 durch den Pfeil 33 dargestellt. Die Außenfläche 32 des jeweiligen Stege 16 ist im bezeichneten Bereich 35 als Sattelfläche, also antiklastisch ausgebildet.

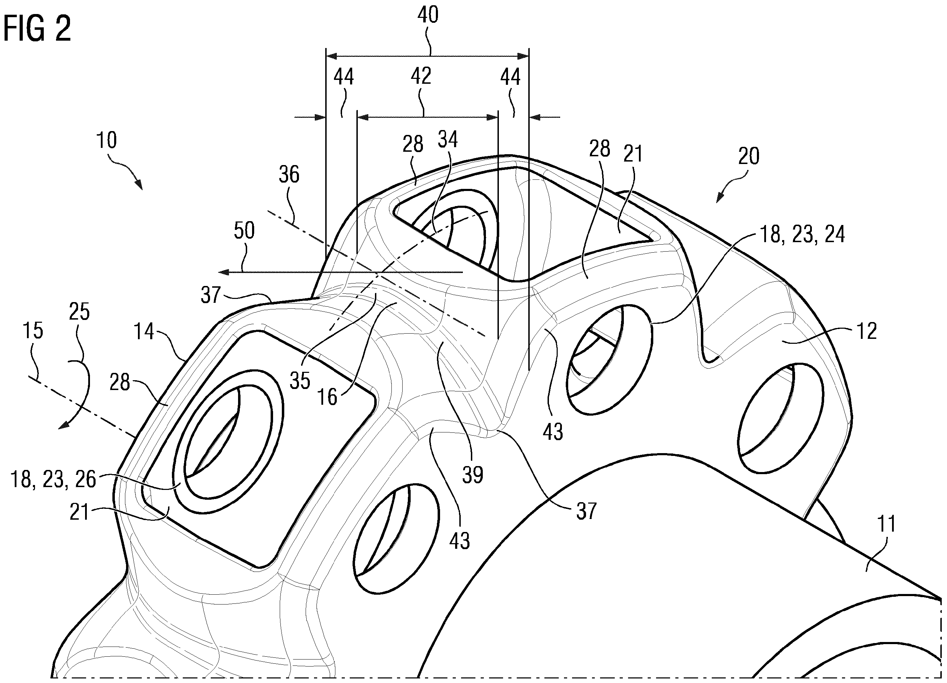

FIG 2 zeigt eine Detailansicht der ersten Ausführungsform des beanspruchten Planetenträgers 10 gemäß FIG 1. Dementsprechend sind FIG 1 und FIG 2 in gegenseitiger Ergänzung aufzufassen. Die Außenfläche 32 des Stegs 16 weist zumindest in einem Bereich 35 eine antiklastische Form auf. Dementsprechend ist die Außenfläche 32 um eine erste Wölbachse 34 konvex gewölbt. Die erste Wölbachse 34 ist, bezogen auf die Hauptdrehachse 15 des Planetenträger 10, im Wesentlichen tangential ausgerichtet, erstreckt sich durch den Steg 16 und folgt gekrümmt in Umfangsrichtung dem Planetenträger 10. Ebenso weist die Außenfläche 32 des Stegs 16 zumindest im Bereich 35 eine zweite Wölbachse 36 auf, um die die Außenfläche 32 konkav gewölbt ausgebildet ist. Im Bereich der ersten und zweiten Wange 12, 14, also im Wesentlichen in den axialen Randabschnitten 44, weist die Außenfläche 32 um die zweite Wölbachse 36 einen ersten Krümmungsradius 37 auf. Zwischen der ersten und zweiten Wange 12, 14, also im Wesentlichen im axialen Mittelabschnitt 42, weist die Außenfläche 32 des Stegs 16 um die zweite Wölbachse 36 einen zweiten Krümmungsradius 39 auf. Der zweite Krümmungsradius 39 ist dabei niedriger als der erste Krümmungsradius 37. Der erste und zweite Krümmungsradius 37, 39 werden in FIG 2 in Radialrichtung betrachtet. Im axialen Mittelabschnitt 42 weist die Außenfläche 32, und damit der entsprechende Steg 16, eine Form mit erhöhten Radien auf. Dadurch wird bei einem Kraftfluss 35 aus einem Tangentialsteg 28 an der ersten Wange 12 auf einen Tangentialsteg 28 an der zweiten Wange 14 derart begünstigt, dass mechanische Spannungsspitzen im Steg 16 vermieden werden. Ein solcher Kraftfluss 35 ist durch Planetenradbolzen 23 hervorufbar, die in entsprechenden Bolzenaugen 18, also einem ersten Bolzenauge 24 an der ersten Wange 12, und einem zweiten Bolzenauge 26 an der zweiten Wange 14, angeordnet sind. Die antiklastische Außenfläche 32 bildet im Bereich der ersten und zweiten Wange 12, 14 eine Materialrücknahme 38, die zu einer Gewichtsersparnis am Planetenträger 10 führt. Ferner weist die antiklastische Außenfläche 32 konvexe Übergänge 43 zu den benachbarten Tangentialstegen 28 auf. Die antiklastische Außenfläche 32 ist damit in einfacher Weise aus einer Gießform entnehmbar, wodurch eine Herstellung des Planetenträgers 10 mittels Gießen vereinfacht.

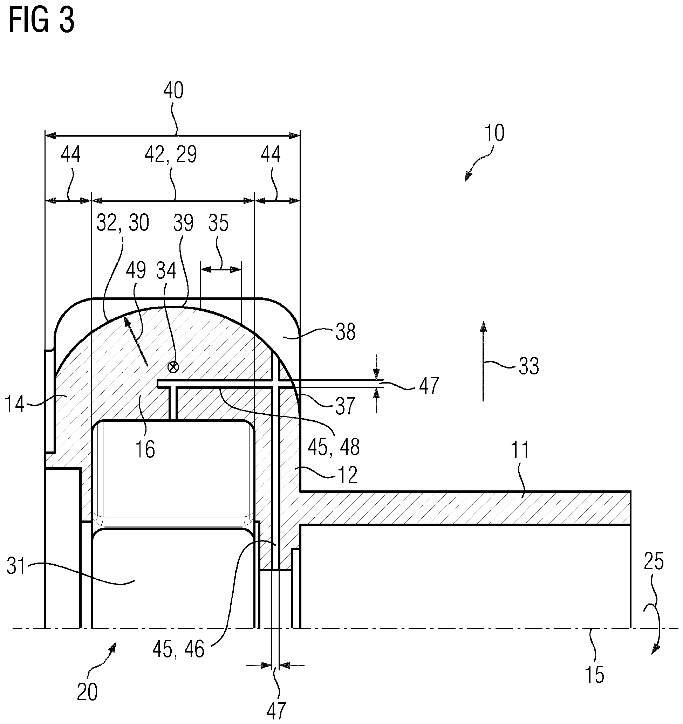

In FIG 3 ist im Längsschnitt schematisch die erste Ausführungsform des beanspruchten Planetenträgers 10 dargestellt. Dementsprechend sind FIG 1, FIG 2 und FIG 3 in gegenseitiger Ergänzung zu lesen. FIG 3 zeigt einen der Stege 16, die die erste und die zweite Wange 12, 14 des Planetenträgers 10 miteinander verbinden. Der Planetenträger 10, also die erste und zweite Wange 12, 14 und der Steg 16, sind einstückig ausgebildet. Die Außenfläche 32 des Stegs 16 weist zumindest im Bereich 35 eine konvexe Wölbung um die erste Wölbachse 34 auf, die sich in FIG 3 in die Zeichenebene erstreckt. Die Außenfläche 32 ist um die erste Wölbachse 34 von der ersten zur zweiten Wange 12, 14 um einen im Wesentlichen konstanten dritten Krümmungsradius 49 gewölbt. Der dritte Krümmungsradius 49 ist derart ausgebildet, dass im Bereich der ersten und zweiten Wange 12, 14, also in den axialen Randbereichen 44 des Stegs 16, eine Materialrücknahme 38 ausgebildet ist. Dadurch wird auch eine Gewichtsersparnis am Planetenträger 10 erzielt. Ferner ist in der ersten Wange 12 eine Radialbohrung 46 ausgebildet, die als Schmierstoffkanal 45 dient. Durch die Materialrücknahme 38 im Bereich der ersten Wange 12 weist die Radialbohrung 46 eine reduzierte Läge in Radialrichtung 33 auf. Ebenso ist im Steg 16 eine Axialbohrung 48 ausgebildet, die auch als Schmierstoffkanal 45 dient und die Radialbohrung 46 kreuzt und so einen durchgehenden Schmierstoffkanal 45 bildet. Durch die antiklastische Außenfläche 32 wird am Steg 16 eine erhöhte Belastbarkeit erzielt. Dementsprechend bietet der Steg 16 ein erhöhtes Maß an Belastbarkeit, das es erlaubt, einen Bohrungsdurchmesser 47 der Radialbohrung 46 und/oder der Axialbohrung 48 zu erhöhen. Dadurch ist ein Durchsatz des Schmierstoffkanals 45 zu steigern. Ferner sind Schmierstoffkanäle 45 wie in FIG 3 in mehreren Stegen 16 ausbildbar und dadurch eine verbesserte Schmierstoffversorgung für Planetenräder 20 erzielbar, die im Planetenträger 10 anzuordnen sind. Des Weiteren zeigt FIG 3 die axialen Randabschnitte 44 des Stegs 16 an der ersten bzw. zweiten Wange 12, 14. Zwischen den axialen Randbereichen 44 ist ein axialer Mittelabschnitt 42 ausgebildet, der im Wesentlichen einen lichten Raum 31 radial begrenzt, der zwischen der ersten und zweiten Wange 12, 14 liegt. Die Axialabmessung 40 des Planetenträgers 10 entspricht im Wesentlichen der Summe der axialen Randbereiche 44 und des axialen Mittelabschnitts 42. Der axiale Mittelabschnitt 42 entspricht im Wesentlichen einer maximalen Planetenradbreite 29, die ein Planetenrad 20 aufweisen kann, das im Planetenträger 10 einzubauen ist. Die Größe des axialen Mittelabschnitts 42 bezogen auf die Axialabmessung 40 des Planetenträgers 10 definiert damit die relative Planetenradbreite des Planetenradträgers 10. Die antiklastische Außenfläche 32 an den Stegen 16 führt zu einer erhöhten Materialausnutzung, so dass der Planetenträger 10 eine relative Planetenradbreite von 0,50 bis 0,85, bevorzugt von 0,55 bis 0,80, besonders bevorzugt 0,60 bis 0,75 aufweist.

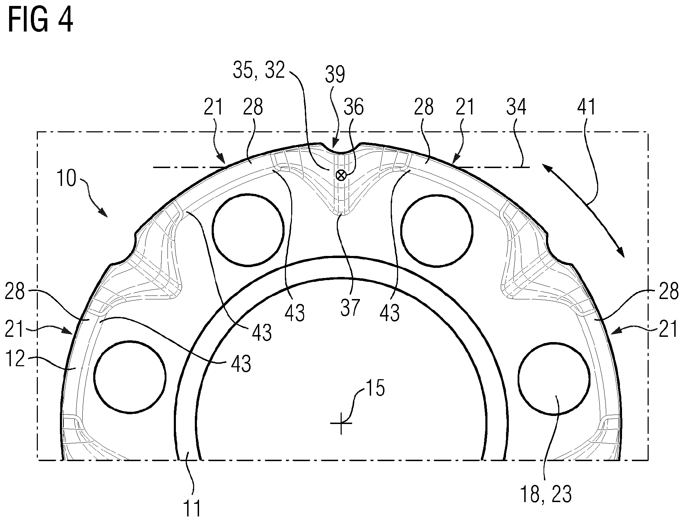

FIG 4 zeigt die erste Ausführungsform des beanspruchten Planetenträgers 10 in einer Stirnansicht auf die erste Wange 12. FIG 4 ist dementsprechend in gegenseitiger Ergänzung mit FIG 1, FIG 2 und FIG 3 zu lesen. FIG 4 zeigt, dass an der antiklastischen Außenfläche 32 des Stegs 16 konvexe Übergänge zu den Tangentialstegen 28 ausgebildet sind. Entlang einer Umfangsrichtung 41 des Planetenträgers 10 weist die erste Wange 12 somit stirnseitig eine wellenförmige Kontur auf, in der konkav gewölbte Außenflächen 32 von Stegen 16 und konvexe Übergänge zu Tangentialstegen 28 alternierend angeordnet sind. Dadurch wird eine vorteilhafte Verteilung von mechanischen Spannungen im Bereich der ersten Wange 12 erzielt. Darüber hinaus wird auch eine Reduzierung von Planschverlusten ermöglicht.

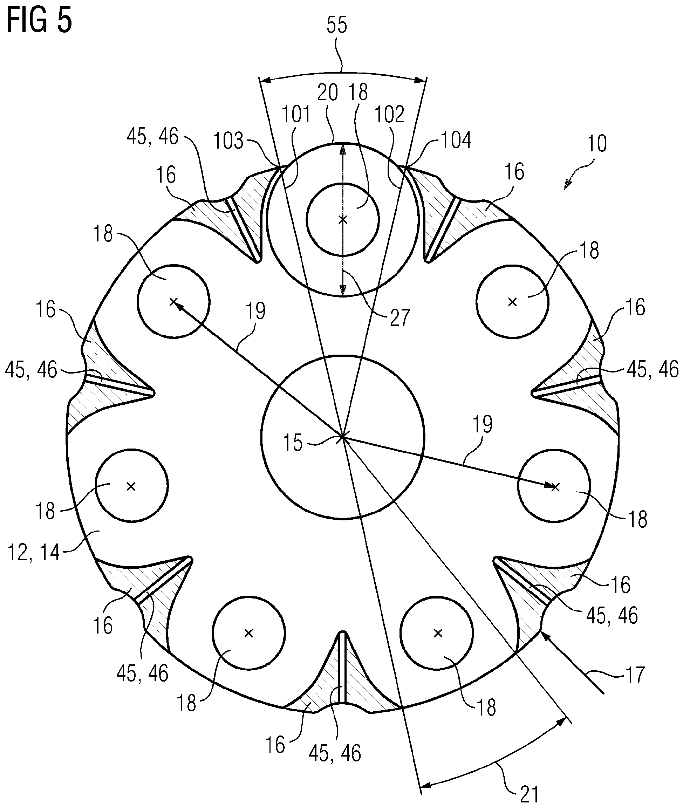

Eine zweite Ausführungsform des beanspruchten Planetenträgers 10 ist in FIG 5 in einem Querschnitt dargestellt. FIG 5 zeigt eine erste oder zweite Wange 12, 14, die im Bereich der Stege 16 quer zur Hauptdrehachse 15 geschnitten ist und in der sieben Bolzenaugen 18 ausgebildet sind. Der Schnitt durch den Planetenträger 10 erfolgt in FIG 5 durch Radialbohrungen 46, die als Schmierstoffkanäle 45 dienen. Zwischen zwei benachbarten Stegen 16 ist jeweils ein Verzahnungsfenster 21 ausgebildet, das einen Fensterwinkel 55 aufweist. Dadurch und eine Radialposition 19 des entsprechenden Bolzenauges 18 ist ein Planetenraddurchmesser 27 vorgegeben, der die Größe des größten einsetzbaren Planetenrads 20 beschreibt. Im Zusammenspiel zwischen dem maximalen Planetenraddurchmesser 27, dem Planetenträgerdurchmesser 17 und dem zugehörigen Fensterwinkel 55 ergibt sich ein Fensteröffnungskoeffizient. Der Fensteröffnungskoeffizient entspricht dabei der Gleichung

$$F = \frac{D_{Träger} \cdot \sin\left(\frac{\alpha}{2}\right)}{D_{Planetenrad\_max}}$$

mit

| | |
|---|---|
| F := | Fensteröffnungskoeffizient; |
| $D_{Träger}$ := | Planetenträgerdurchmesser am Berührungspunkt von Steg und Schenkel des Fensteröffnungswinkels; |
| $D_{Planetenrad\_max}$ := | Maximaler Planetenraddurchmesser; |
| $\alpha$ := | Fensterwinkel. |

Der Fensteröffnungskoeffizient beträgt zwischen 0,3 und 1,5. Hierdurch wird eine erhöhte Ausnutzung des im Planetenträger 10 zur Verfügung gestellten Raums erzielt. Der Fensteröffnungskoeffizient ist in einem axial mittleren Bereich eines Verzahnungseingriffs eines Planetenrads zu bestimmen.

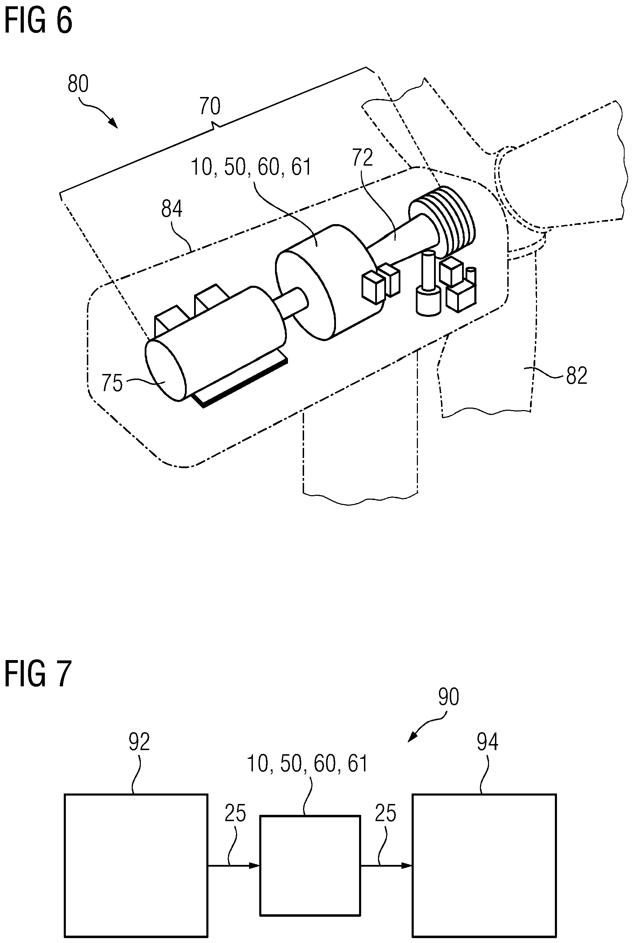

Ferner ist in FIG 6 eine Ausführungsform einer beanspruchten Windkraftanlage 80 dargestellt. Die Windkraftanlage 80 weist einen Rotor 82 auf, der an einer Gondel 84 drehbar angebracht ist. Der Rotor 82 ist mit einer Rotorwelle 72 verbunden, durch die über ein Getriebe 50 ein Generator 75 angetrieben wird. Die Rotorwelle 72, das Getriebe 50 und der Generator 75 gehören zu einem Antriebsstrang 70 der Windkraftanlage 80, der in der Gondel 84 aufgenommen ist. Das Getriebe 50 ist ein Planetengetriebe 60, das mindestens einen Planetenträger 10 gemäß einer der oben dargestellten Ausführungsformen aufweist.

FIG 7 zeigt schematisch den Aufbau einer beanspruchten Industrie-Applikation 90, die eine Antriebseinheit 92 und eine Abtriebseinheit 94 aufweist, die drehmomentübertragend über ein Getriebe 50 miteinander verbunden sind. Die Antriebseinheit 92 ist dazu ausgebildet, eine Antriebsleistung 25 bereitzustellen, die für den Betrieb der Abtriebseinheit 94 notwendig ist. Die Antriebseinheit 92 ist dazu beispielsweise als Elektromotor, als Verbrennungsmotor, oder als Hydraulikmotor ausgebildet. Die Abtriebseinheit 94 ist als mechanische Anwendung ausgebildet. Die Abtriebseinheit 94 ist dementsprechend ausgebildet, dass die Industrie-Applikation 90 beispielsweise eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ist. Das Getriebe 50 ist dabei als Planetengetriebe 60 mit mindestens einer Planetenstufe 61 mit einem Planetenträger 10 nach einer der oben skizzierten Ausführungsformen ausgebildet.

**Patentansprüche**

1. Planetenträger (10), umfassend eine erste und eine zweite Wange (12, 14), die über eine Mehrzahl an Stegen (16) miteinander verbunden sind, wobei mindestens einer der Stege (16) eine gewölbte Außenfläche (32) aufweist, wobei die gewölbte Außenfläche (32) im Wesentlichen in einer Radialrichtung (33) nach außen gerichtet ist und zu einer Mantelfläche des Stegs (16) gehört, wobei der zumindest eine Steg (16) einen Übergang (30) zur ersten Wange (12) und einen Übergang (30) zur zweiten Wange (14) umfasst und die gewölbte Außenfläche (32) am Übergang (30) um einer erste Wölbachse (34) konvex gewölbt ausgebildet ist wobei der Planetenträger (10) einstückig ausgebildet ist, **dadurch gekennzeichnet, dass** die gewölbte Außenfläche (32) in zumindest einem Bereich (35), der in einem axialen Mittelabschnitt (42) und einem axialen Randabschnitt (44) liegt, antiklastisch ausgebildet ist, wobei eine Kombination des axialen Mittelabschnitts (42) mit den axialen Randabschnitt (44) im Wesentlichen eine Axialabmessung (40) des Planetenträgers (10) definiert.

2. Planetenträger (10) nach Anspruch 1, **dadurch gekennzeichnet, dass** sich durch die antiklastische Außenfläche (32) des Stegs (16) an der ersten und/oder zweiten Wange (12, 14) eine Materialrücknahme (38) ergibt.

3. Planetenträger (10) nach Anspruch 2, **dadurch gekennzeichnet, dass** die erste Wölbachse (34) entlang einer Tangentialrichtung des Planetenträgers (10) ausgerichtet ist.

4. Planetenträger (10) nach einem der Ansprüche 1 bis 3, **dadurch gekennzeichnet, dass** die gewölbte Außenfläche (32) um eine zweite Wölbachse (36) konkav gewölbt ausgebildet ist.

5. Planetenträger (10) nach Anspruch 4, **dadurch gekennzeichnet**, die zweite Wölbachse (36) parallel zu einer Drehachse (15) des Planetenträgers (10) ausgerichtet ist.

6. Planetenträger (10) nach Anspruch 4 oder 5, **dadurch gekennzeichnet, dass** die gewölbte Außenfläche (32) um die zweite Wölbachse (36) in dem axialen Randabschnitt (44) des Stegs (16) einen ersten Krümmungsradius (37) aufweist, der betragsmäßig geringer ist als ein zweiter Krümmungsradius (39) in dem axialen Mittelabschnitt (42) des Stegs (16).

7. Planetenträger (10) nach einem der Ansprüche 1 bis 6, **dadurch gekennzeichnet, dass** der Steg (16) um die erste Wölbachse (34) einen im Wesentlichen konstanten dritten Krümmungsradius aufweist und der Steg (16) konstant in den Übergang (30) zur ersten und/oder zweiten Wange (12, 14) übergeht.

8. Planetenträger (10) nach einem der Ansprüche 1 bis 7, **dadurch gekennzeichnet, dass** die gewölbte Außenfläche (32) in einem Bereich der ersten und/oder zweiten Wange (12, 14) einen konvexen Übergang (43) zu einem Umfangssteg (28) aufweist.

9. Planetenträger (10) nach einem der Ansprüche 1 bis 8, **dadurch gekennzeichnet, dass** im Steg (16), in der ersten und/oder zweiten Wange (12, 14) zumindest ein Schmierstoffkanal (45) ausgebildet ist.

10. Planetenträger (10) nach einem der Ansprüche 1 bis 9, **dadurch gekennzeichnet, dass** der Planetenträger (10) zu einem Aufnehmen von mindestens vier Planetenrädern (20) ausgebildet ist.

**11.** Planetenträger (10) nach einem der Ansprüche 1 bis 10, **dadurch gekennzeichnet, dass** der Planetenträger (10) eine massenspezifische Drehmomentdichte von 200 Nm/kg bis 1600 Nm/kg aufweist.

**12.** Planetenträger (10) nach einem der Ansprüche 1 bis 11, **dadurch gekennzeichnet, dass** der Planetenträger (10) eine relative Planetenradbreite von 0,50 bis 0,85 aufweist, wobei die relative Planetenradbreite ein Verhältnis zwischen einer Axialabmessung des lichten Raums zwischen der ersten und zweiten Wange (12, 14) und einer axialen Außenabmessung des Planetenträgers von der ersten zur zweiten Wange (12, 14) ist.

**13.** Planetengetriebe (60), umfassend zumindest eine Planetenstufe (61), die ein Hohlrad (62), einen Planetenträger (10) mit zumindest einem Planetenrad (20) und ein Sonnenrad (64) aufweist, **dadurch gekennzeichnet, dass** der Planetenträger (10) nach einem der Ansprüche 1 bis 12 ausgebildet ist.

**14.** Antriebsstrang (70), umfassend eine Rotorwelle (72), die drehmomentübertragend mit einem Getriebe (50) verbunden ist, das drehmomentübertragend mit einem Generator (75) verbunden ist, **dadurch gekennzeichnet, dass** das Getriebe (50) als Planetengetriebe (60) nach Anspruch 13 ausgebildet ist.

**15.** Windkraftanlage (80), umfassend eine Gondel (84), an der drehbar ein Rotor (82) befestigt ist, wobei in der Gondel (84) ein Antriebsstrang (70) angeordnet ist, **dadurch gekennzeichnet, dass** der Antriebsstrang (70) nach Anspruch 14 ausgebildet ist.

**16.** Industrie-Applikation (90), umfassend eine Antriebseinheit (92), die drehmomentübertragend mit einem Getriebe (50) verbunden ist, das wiederum drehmomentübertragend mit einer Abtriebseinheit (94) verbunden ist, **dadurch gekennzeichnet, dass** das Getriebe (50) als Planetengetriebe (60) nach Anspruch 13 ausgebildet ist.

## Claims

**1.** Planetary carrier (10), comprising a first and a second cheek (12, 14) which are connected to one another via a plurality of webs (16), at least one of the webs (16) having a curved outer surface (32), the curved outer surface (32) being directed outwards substantially in a radial direction (33) and belonging to a shell surface of the web (16), the at least one web (16) comprising a transition (30) to the first cheek (12) and a transition (30) to the second cheek (14), and the curved outer surface (32) being of convexly curved configuration about a first curvature axis (34) at the transition (30), the planetary carrier (10) being of single-piece configuration, **characterized in that** the curved outer surface (32) is of anticlastic configuration in at least one region (35) which lies in an axial centre portion (42) and an axial edge portion (44), a combination of the axial centre portion (42) with the axial edge portion (44) defining substantially an axial dimension (40) of the planetary carrier (10).

**2.** Planetary carrier (10) according to Claim 1, **characterized in that** a material cut-out (38) results from the anticlastic outer surface (32) of the web (16) on the first and/or second cheek (12, 14).

**3.** Planetary carrier (10) according to Claim 2, **characterized in that** the first curvature axis (34) is oriented along the tangential direction of the planetary carrier (10).

**4.** Planetary carrier (10) according to one of Claims 1 to 3, **characterized in that** the curved outer surface (32) is of concavely curved configuration about a second curvature axis (36).

**5.** Planetary carrier (10) according to Claim 4, **characterized in that** the second curvature axis (36) is oriented parallel to a rotational axis (15) of the planetary carrier (10).

**6.** Planetary carrier (10) according to Claim 4 or 5, **characterized in that** the curved outer surface (32) has a first curvature radius (37) about the second curvature axis (36) in the axial edge portion (44) of the web (16) which is of smaller magnitude than a second curvature radius (39) in the axial centre portion (42) of the web (16) .

**7.** Planetary carrier (10) according to one of Claims 1 to 6, **characterized in that** the web (16) has a substantially constant third curvature radius about the first curvature axis (34), and the web (16) merges constantly into the transition (30) to the first and/or second cheek (12, 14).

**8.** Planetary carrier (10) according to one of Claims 1 to 7, **characterized in that** the curved outer surface (32) has a convex transition (43) to a circumferential web (28) in a region of the first and/or second cheek (12, 14) .

9. Planetary carrier (10) according to one of Claims 1 to 8, **characterized in that** at least one lubricant channel (45) is configured in the web (16), in the first and/or second cheek (12, 14).

10. Planetary carrier (10) according to one of Claims 1 to 9, **characterized in that** the planetary carrier (10) is configured to receive at least four planetary gears (20) .

11. Planetary carrier (10) according to one of Claims 1 to 10, **characterized in that** the planetary carrier (10) has a mass-specific torque density of from 200 Nm/kg to 1600 Nm/kg.

12. Planetary carrier (10) according to one of Claims 1 to 11, **characterized in that** the planetary carrier (10) has a relative planetary gear width of from 0.50 to 0.85, the relative planetary gear which being a ratio between an axial dimension of the clear space between the first and second cheek (12, 14) and an axial external dimension of the planetary carrier from the first to the second cheek (12, 14).

13. Planetary transmission (60), comprising at least one planetary stage (61) which has a ring gear (62), a planetary carrier (10) with at least one planetary gear (20), and a sun gear (64), **characterized in that** the planetary carrier (10) is configured according to one of Claims 1 to 12.

14. Drive train (70), comprising a rotor shaft (72) which is connected in a torque-transmitting manner to a transmission (50) which is connected in a torque-transmitting manner to a generator (75), **characterized in that** the transmission (50) is configured as a planetary transmission (60) according to Claim 13.

15. Wind power plant (80), comprising a nacelle (84), to which a rotor (82) is fastened rotatably, a drive train (70) being arranged in the nacelle (84), **characterized in that** the drive train (70) is configured according to Claim 14.

16. Industrial application (90), comprising a drive unit (92) which is connected in a torque-transmitting manner to a transmission (50) which is in turn connected in a torque-transmitting manner to a output unit (94), **characterized in that** the transmission (50) is configured as a planetary transmission (60) according to Claim 13.

**Revendications**

1. Porte-satellites (10), comportant une première et une deuxième joue (12, 14) qui sont reliées l'une à l'autre par le biais d'une pluralité d'éléments jointifs (16), au moins l'un des éléments jointifs (16) présentant une surface extérieure incurvée (32), la surface extérieure incurvée (32) étant orientée vers l'extérieur sensiblement dans une direction radiale (33) et appartenant à une surface d'enveloppe de l'élément jointif (16), l'au moins un élément jointif (16) comprenant une transition (30) vers la première joue (12) et une transition (30) vers la deuxième joue (14) et la surface extérieure incurvée (32) étant réalisée de manière incurvée de façon convexe autour d'un premier axe de courbure (34) au niveau de la transition (30), le porte-satellites (10) étant réalisé d'une seule pièce, **caractérisé en ce que** la surface extérieure incurvée (32) est réalisée de manière anticlastique dans au moins une région (35) qui se situe dans une portion centrale axiale (42) et une portion de bord axiale (44), une combinaison de la portion centrale axiale (42) avec la portion de bord axiale (44) définissant sensiblement une dimension axiale (40) du porte-satellites (10).

2. Porte-satellites (10) selon la revendication 1, **caractérisé en ce qu'**une dépouille de matière (38) est produite par la surface extérieure anticlastique (32) de l'élément jointif (16) au niveau de la première et/ou la deuxième joue (12, 14).

3. Porte-satellites (10) selon la revendication 2, **caractérisé en ce que** le premier axe de courbure (34) est orienté le long d'une direction tangentielle du porte-satellites (10).

4. Porte-satellites (10) selon l'une des revendications 1 à 3, **caractérisé en ce que** la surface extérieure incurvée (32) est réalisée de manière incurvée de façon concave autour d'un deuxième axe de courbure (36) .

5. Porte-satellites (10) selon la revendication 4, **caractérisé en ce que** le deuxième axe de courbure (36) est orienté parallèlement à un axe de rotation (15) du porte-satellites (10).

**6.** Porte-satellites (10) selon la revendication 4 ou 5, **caractérisé en ce que** la surface extérieure incurvée (32) présente, autour du deuxième axe de courbure (36), dans la portion de bord axiale (44) de l'élément jointif (16), un premier rayon de courbure (37) qui est de plus faible amplitude qu'un deuxième rayon de courbure (39) dans la partie centrale axiale (42) de l'élément jointif (16) .

**7.** Porte-satellites (10) selon l'une des revendications 1 à 6, **caractérisé en ce que** l'élément jointif (16) présente, autour du premier axe de courbure (34), un troisième rayon de courbure sensiblement constant et l'élément jointif (16) se prolonge de manière constante dans la transition (30) vers la première et/ou la deuxième joue (12, 14).

**8.** Porte-satellites (10) selon l'une des revendications 1 à 7, **caractérisé en ce que** la surface extérieure incurvée (32) présente, dans une région de la première et/ou la deuxième joue (12, 14), une transition convexe (43) vers un élément jointif périphérique (28).

**9.** Porte-satellites (10) selon l'une des revendications 1 à 8, **caractérisé en ce qu'**au moins un canal de lubrifiant (45) est réalisé dans l'élément jointif (16), dans la première et/ou la deuxième joue (12, 14).

**10.** Porte-satellites (10) selon l'une des revendications 1 à 9, **caractérisé en ce que** le porte-satellites (10) est réalisé pour une réception d'au moins quatre roues satellites (20).

**11.** Porte-satellites (10) selon l'une des revendications 1 à 10, **caractérisé en ce que** le porte-satellites (10) présente une densité de couple spécifique à la masse de 200 Nm/kg à 1600 Nm/kg.

**12.** Porte-satellites (10) selon l'une des revendications 1 à 11, **caractérisé en ce que** le porte-satellites (10) présente une largeur relative de roue satellite de 0,50 à 0,85, la largeur relative de roue satellite étant un rapport entre une dimension axiale de l'espace libre entre la première et la deuxième joue (12, 14) et une dimension extérieure axiale du porte-satellites de la première à la deuxième joue (12, 14).

**13.** Transmission planétaire (60), comprenant au moins un étage planétaire (61) qui présente une couronne (62), un porte-satellites (10) comportant au moins une roue satellite (20) et une roue planétaire (64), **caractérisée en ce que** le porte-satellites (10) est réalisé selon l'une des revendications 1 à 12.

**14.** Chaîne cinématique (70), comprenant un arbre de rotor (72) qui est relié à une transmission (50) de manière à transmettre un couple, laquelle transmission est reliée à un générateur (75) de manière à transmettre un couple, **caractérisée en ce que** la transmission (50) est réalisée sous forme de transmission planétaire (60) selon la revendication 13.

**15.** Éolienne (80), comprenant une nacelle (84) à laquelle un rotor (82) est fixé de manière rotative, une chaîne cinématique (70) étant disposée dans la nacelle (84), **caractérisée en ce que** la chaîne cinématique (70) est réalisée selon la revendication 14.

**16.** Application industrielle (90), comprenant une unité d'entraînement (92) qui est reliée à une transmission (50) de manière à transmettre un couple, laquelle transmission est pour sa part reliée à une unité de sortie (94) de manière à transmettre un couple, **caractérisée en ce que** la transmission (50) est réalisée sous forme de transmission planétaire (60) selon la revendication 13.

FIG 1

FIG 2

EP 4 115 098 B1

FIG 3

# FIG 4

# FIG 5

FIG 6

80

70

10, 50, 60, 61

84

72

75

82

FIG 7

90

92

10, 50, 60, 61

94

25

25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014203587 A1
- EP 2677209 A1
- EP 3587863 A1
- DE 102014200463 A1
- DE 102013221862 A2
- DE 102007003676 A1
- EP 19171876